# FASCICULE DE BREVET EUROPEEN

(11) **EP 2 473 373 B1**
(45) Date de publication et mention de la délivrance du brevet: **01.01.2014**
(21) Numéro de dépôt: 10752088.4
(22) Date de dépôt: 23.07.2010
(51) Int. Cl.: B60N 2/68

(54) **SIEGE DE VEHICULE ET SON PROCEDE DE FABRICATION**
FAHRZEUGSITZ UND VERFAHREN ZU SEINER HERSTELLUNG
VEHICLE SEAT AND METHOD FOR MAKING SAME

(30) Priorité: 03.09.2009 FR 0956014
(43) Date de publication de la demande: 11.07.2012
(73) Titulaire: FAURECIA Sièges d'Automobile, 92000 Nanterre (FR)
(72) Inventeur: RENAULT, Thierrry, 27200 Vernon (FR); KULKARNI, Amit, Troy 48084 (US)
(74) Mandataire: Cabinet Plasseraud
(86) Numéro de dépôt international: PCT/FR2010/051562
(87) Numéro de publication internationale: WO 2011/027057

(56) Documents cités:
- WO-A1-2008/019981
- DE-A1- 4 036 462
- DE-A1- 4 238 549
- DE-A1- 19 757 060

## Description

La présente invention est relative aux sièges de véhicules et à leurs procédés de fabrication.

Plus particulièrement, l'invention concerne un siège de véhicule comportant une assise et un dossier relié à l'assise par au moins un mécanisme d'articulation adapté permettre un réglage d'inclinaison du dossier et pour verrouiller le dossier dans l'inclinaison choisie, le siège comportant un élément de siège choisi parmi le dossier et l'assise, ledit élément de siège s'étendant selon un plan moyen et présentant deux côtés, et ledit élément de siège comportant :
- une coque en matière plastique présentant deux bords latéraux qui s'étendent respectivement le long des côtés de l'élément de siège entre une première extrémité proche du mécanisme d'articulation et une deuxième extrémité éloignée dudit mécanisme d'articulation,
- au moins un insert rigide en matériau composite surmoulé par un des deux bords latéraux de la coque en matière plastique, ledit insert rigide s'étendant sur une certaine longueur à partir de la première extrémité dudit bord latéral correspondant, ledit insert comprenant des fibres résistantes noyées dans une matrice synthétique, et ledit insert présentant une section en U ayant une âme sensiblement perpendiculaire au plan moyen de l'élément de siège et deux ailes latérales sensiblement parallèles au plan moyen de l'élément de siège, ladite âme étant reliée audit mécanisme d'articulation au niveau de la première extrémité du bord latéral correspondant.

Le document US-A-2008/038569 décrit un exemple de siège de ce type.

La présente invention a notamment pour but de perfectionner les sièges de ce type, notamment pour en améliorer la résistance mécanique.

A cet effet, selon l'invention, un siège du genre en question est caractérisé en ce que ledit insert est formé en deux pièces composites solidarisées entre elles, chacune desdites deux pièces composites présentant une section en L et comprenant une partie d'âme appartenant à l'âme de l'insert et l'une des ailes de l'insert, chacune des deux parties d'âme s'étendant sur sensiblement toute la hauteur de l'âme de l'insert.

La réalisation des inserts en deux pièces composites permet d'assurer une qualité optimale de la matière composite au niveau des deux ailes latérales de chaque insert, qui sont les parties les plus sollicitées mécaniquement notamment en cas d'accident subi par le véhicule. En effet, on évite ainsi que les fibres résistantes de ces deux parties ne soient désorganisées au cours du processus de mise en forme des pièces composites par moulage dans un moule chaud, comme il sera expliqué plus en détail ci-après.

Dans divers modes de réalisation du siège selon l'invention, on peut éventuellement avoir recours en outre à l'une et/ou à l'autre des dispositions suivantes :
- les deux pièces composites sont solidarisées entre elles par la coque en matière plastique, qui est surmoulée sur lesdites deux pièces composites ;
- les deux pièces composites sont solidarisées entre elles par fusion le long d'une ligne de jonction entre les parties d'âme des deux pièces composites ;
- les deux pièces composites comportent respectivement deux bandes de recouvrement qui sont superposées l'une à l'autre et assemblées entre elles par fusion le long de ladite ligne de jonction ;
- les deux pièces composites sont solidarisées entre elles par au moins une feuille de composite qui recouvre au moins partiellement les parties d'âme des deux pièces composites et les ailes latérales de l'insert ;
- le siège comporte en outre au moins un flasque métallique qui recouvre au moins partiellement les parties d'âme des deux pièces composites et qui est solidarisé auxdites deux pièces composites, ledit flasque métallique étant surmoulé par le bord latéral correspondant de la coque en matière plastique et étant relié au mécanisme
d'articulation ;
- le flasque métallique comporte des évidements en regard des deux parties d'âme des deux pièces composites et est solidarisé avec chacune desdites parties d'âme par des rivetages formés par pénétration de la matière de ces parties d'âme dans lesdits évidements ;
- le flasque métallique recouvre au moins partiellement l'âme et les deux ailes latérales de l'insert et est solidarisé également avec lesdites ailes latérales par des rivetages formés par pénétration de la matière de ces ailes latérales dans des évidements présentés par le flasque métallique en regard desdites ailes latérales ;
- le flasque métallique est solidarisé par vissage avec une patte rigide appartenant au mécanisme d'articulation, ledit flasque métallique présentant au moins une surface d'appui non enrobée par la coque en matière plastique et la patte du mécanisme d'articulation étant en appui sur ladite surface d'appui.

Par ailleurs, l'invention a également pour objet un procédé de fabrication d'un siège tel que défini ci-dessus, comprenant au moins les étapes suivantes :
(a) une étape de fabrication de pièces composites au cours de laquelle on forme les deux pièces composites par pressage à chaud,
(b) une étape d'assemblage au cours de laquelle on assemble les deux pièces composites par leurs parties d'âme respectives.

Dans divers modes de réalisation du procédé selon l'invention, on peut éventuellement avoir recours en outre à l'une et/ou à l'autre des dispositions suivantes :
- au cours de l'étape (a) de fabrication des pièces composites, on fabrique chaque pièce composite par mise en forme d'un flan comprenant une superposition de feuilles composites, par pressage du flan dans un moule chaud qui comprend deux parties de moule déplaçables l'une vers l'autre selon une direction de pressage, l'aile latérale de la pièce composite ainsi moulée étant sensiblement perpendiculaire à ladite direction de pressage ;
- au cours de l'étape (b) d'assemblage, on dispose les deux pièces composites en superposant partiellement leurs parties d'âme sur une certaine zone de recouvrement et on fusionne lesdites parties d'âme dans ladite zone de recouvrement par pressage dans un moule chaud ;
- au cours de l'étape (b) d'assemblage, on superpose les deux pièces composites avec un flasque métallique qui comporte des évidements et qui recouvre au moins partiellement lesdites deux pièces composites, et on assemble les deux pièces composites en faisant fluer la matière des pièces composites au travers des évidements du flasque métallique, par pressage dans un moule chaud.

D'autres caractéristiques et avantages de l'invention apparaîtront au cours de la description suivante d'une de ses formes de réalisation et de certaines de ses variantes, données à titre d'exemples non limitatifs, en regard des dessins joints.

Sur les dessins :
- la figure 1 est une vue de côté d'un siège selon une forme de réalisation de l'invention,
- la figure 2 est une vue en perspective de l'ossature du dossier du siège de la figure 1,
- la figure 2a est une vue en coupe selon la ligne IIa-IIa de la figure 1,
- la figure 3 est une vue éclatée en perspective montrant les renforts rigides et les mécanismes d'articulation des deux côtés du dossier du siège,
- la figure 4 est une vue de détail éclatée en perspective montrant la partie inférieure de l'un des renforts latéraux de la figure 3,
- la figure 5 est une vue en coupe selon la ligne V-V de la figure 4,
- la figure 6 est une vue similaire à la figure 4, montrant une partie du renfort latéral de la figure 4, vue sous un autre angle,
- la figure 7 est une vue de côté montrant un insert en matériau composite appartenant au renfort latéral des figures 4 à 6,
- la figue 8 est une vue schématique montrant deux flancs composites destinés à former l'insert en matériau composite de la figure 7 après mise en forme et assemblage,
- les figures 9 et 10 sont des vues schématiques illustrant la constitution des deux flancs composites de la figure 8,
- les figures 11 et 12 sont des schémas de principe illustrant la mise en forme des deux flancs composites de la figure 8, par moulage à chaud,
- la figure 13 est une vue schématique illustrant l'assemblage des deux pièces composites issues des moulages illustrés aux figures 11 et 12, par recouvrement partiel,
- et les figures 14 à 16 sont des schémas de principe illustrant diverses variantes de l'assemblage de la figure 13.

Sur les différentes figures, les mêmes références désignent des éléments identiques ou similaires.

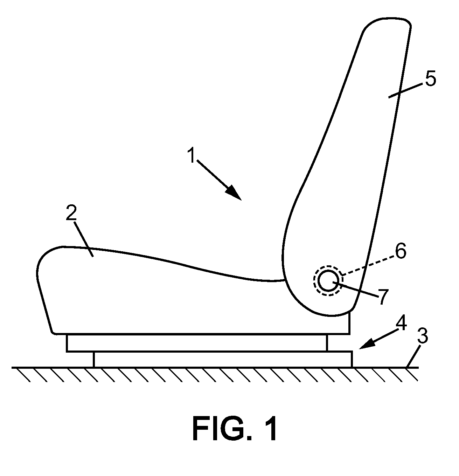

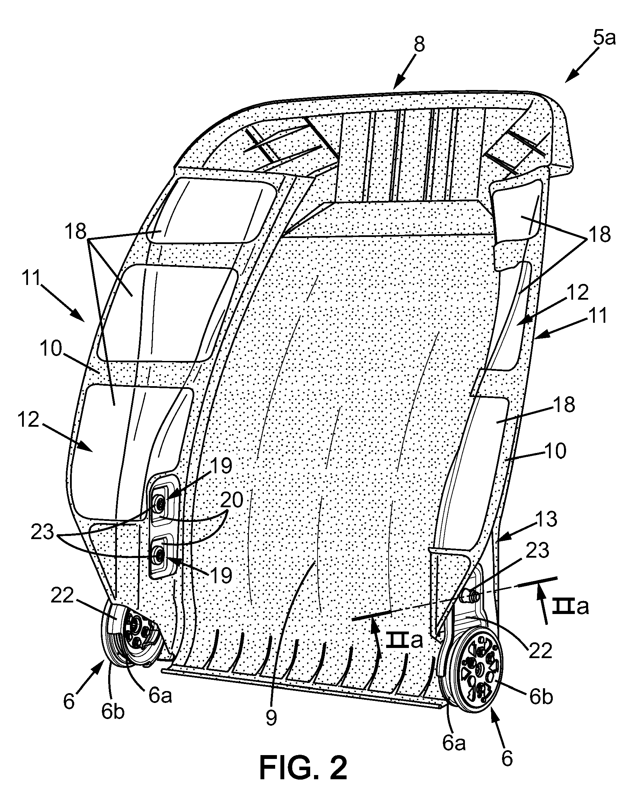

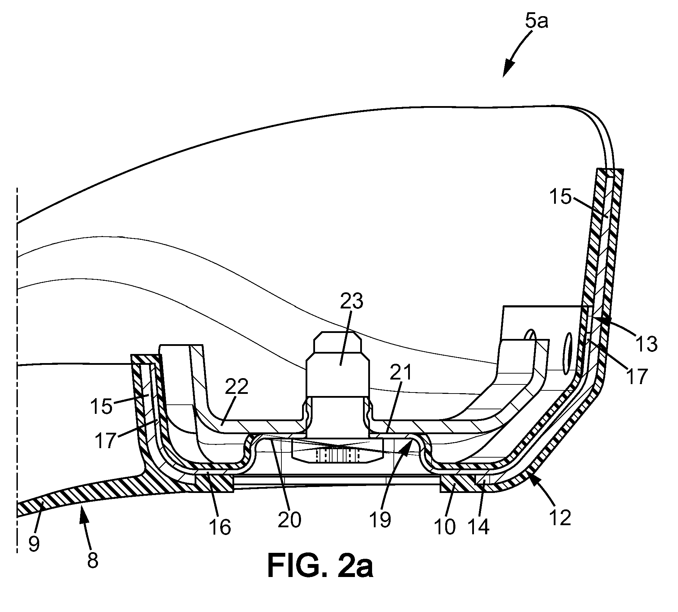

La figure 1 représente un siège 1 de véhicule automobile, par exemple un siège avant. Ce siège 1 comporte une assise 2 qui est fixée sur le plancher 3 du véhicule, par exemple par l'intermédiaire de glissières 4 permettant un réglage de la position longitudinale du siège 1. L'assise 2 porte un dossier 5 qui peut être monté pivotant sur l'assise 2 au moyen d'au moins un mécanisme d'articulation 6 qui est commandé par exemple par une poignée rotative 7 de façon à permettre de régler l'inclinaison du dossier 5. Dans l'exemple considéré ici, les mécanismes d'articulation 6 sont au nombre de deux, disposés de chaque côté du siège et commandés en synchronisme par la poignée 7 (voir la figure 2).

Le dossier 5 du siège comporte une ossature 5a qui est représentée sur la figure 2, cette ossature étant normalement recouverte par une matelassure de mousse, elle-même recouverte vers l'avant par une coiffe en tissu, cuir ou autre.

L'ossature 5a du dossier comporte ici une coque 8 en matière plastique, notamment en polyamide et par exemple en polyamide 6.

Comme on peut le voir sur la figure 2, cette coque 8 en matière plastique peut comporter par exemple un fond 9 parallèle au plan moyen du dossier 5 et deux bords latéraux sensiblement verticaux 10, formant les deux côtés du dossier 5.

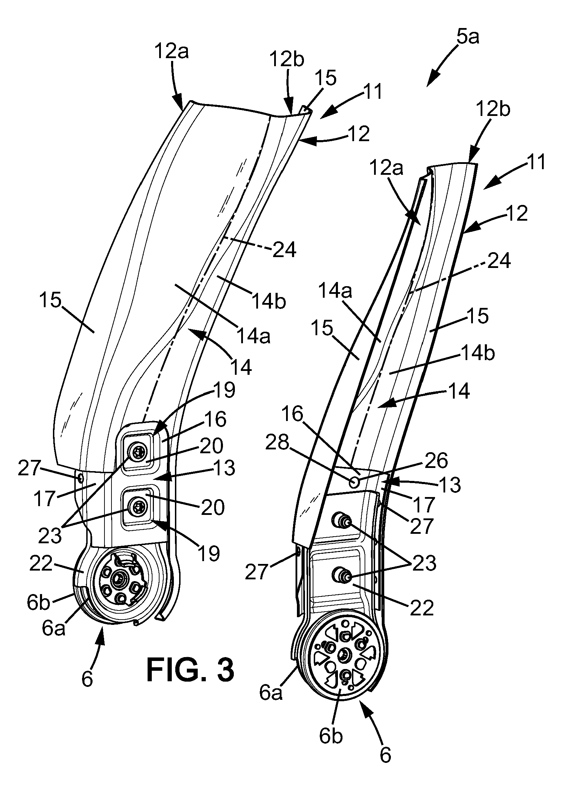

Comme représenté sur les figures 2, 2a et 3, chacun des bords latéraux 10 de la coque en matière plastique est surmoulé sur un renfort latéral rigide 11 qui se compose d'un insert rigide 12 en matériau composite et d'un flasque métallique 13.

L'insert 12 est réalisé en un matériau composite comprenant des fibres résistantes, par exemple des fibres de carbone, noyées dans une matrice synthétique, par exemple un thermoplastique.

L'insert 12 peut notamment être en matière plastique renforcée par des fibres continues ("CFRT"). Chaque insert 12 peut par exemple présenter une section sensiblement en forme de U, avec une âme 14 sensiblement perpendiculaire au plan moyen du dossier et deux ailes latérales 15 s'étendant perpendiculairement à l'âme 14, par exemple vers l'extérieur du dossier.

Chaque insert 11 en matériau composite s'étend longitudinalement sur une longueur représentant la majeure partie de la hauteur du bord latéral correspondant 10 de la coque en matière plastique, à partir de l'extrémité inférieure dudit bord latéral et jusqu'au voisinage de l'extrémité supérieure dudit bord latéral dans l'exemple considéré ici.

Comme on peut le voir sur les figures 2a et 3, chaque flasque 13 présente également une section en forme de U, avec une âme 16 partiellement superposée à l'âme 14 de l'insert composite correspondant et deux ailes latérales 17 partiellement superposées aux ailes latérales 15 de l'insert composite correspondant, le flasque métallique 13 étant par exemple disposé à l'intérieur de la section en U formée par l'insert composite 11, c'est-à-dire vers l'extérieur du dossier dans l'exemple représenté sur les dessins.

Chaque flasque 13 est solidarisé avec l'insert composite 12 correspondant notamment par rivetage, comme il sera expliqué ci-après. De plus, comme on peut le voir sur la figure 2a, chaque renfort latéral 11 est en outre surmoulé par le bord latéral 10 correspondant de la coque en matière plastique, qui enrobe la majeure partie de chaque insert composite 12 (à l'exception éventuelle de certaines zones 18 laissées libres, visibles sur la figure 2) et chaque flasque métallique 13.

Les flasques métalliques 13 peuvent toutefois éventuellement comporter des zones de fixation 19, visibles sur les figures 2, 2a et 3, qui ne sont pas enrobées par la matière plastique de la coque 8. Ces zones de fixation 19 peuvent par exemple être formées par des bossages ménagés par emboutissage local de l'âme 16 des flasques 13 et peuvent présenter par exemple chacune deux surfaces d'appui métallique 20, 21 non enrobées par la matière plastique, sur chacune des faces de l'âme 16 de chaque flasque métallique 13.

Comme on peut le voir sur les figures 2, 2a et 3, les faces d'appui 21 peuvent servir d'appui pour des pattes métalliques 22 qui sont solidaires de l'un des flasques 6a du mécanisme d'articulation 6 correspondant, l'autre flasque 6b dudit mécanisme d'articulation étant quant à lui fixé à l'assise 2 du siège. Chaque patte métallique 22 s'étend sensiblement parallèlement à l'âme 16 du flasque métallique 13 correspondant et peut être fixé audit flasque métallique 13 par exemple par vissage, notamment par des boulons 23 qui prennent appui contre les surfaces d'appui 20 et contre la face extérieure de la patte métallique 22 correspondante.

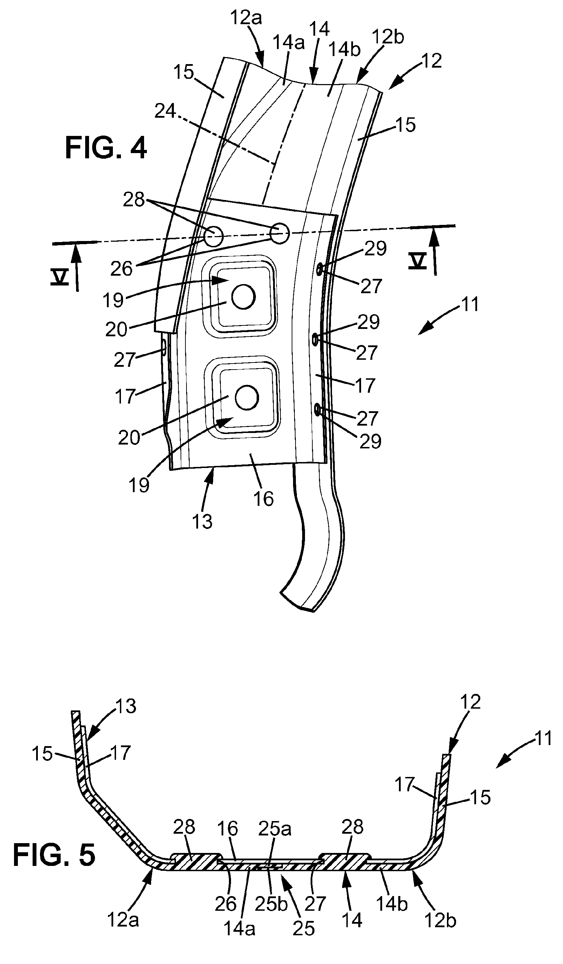

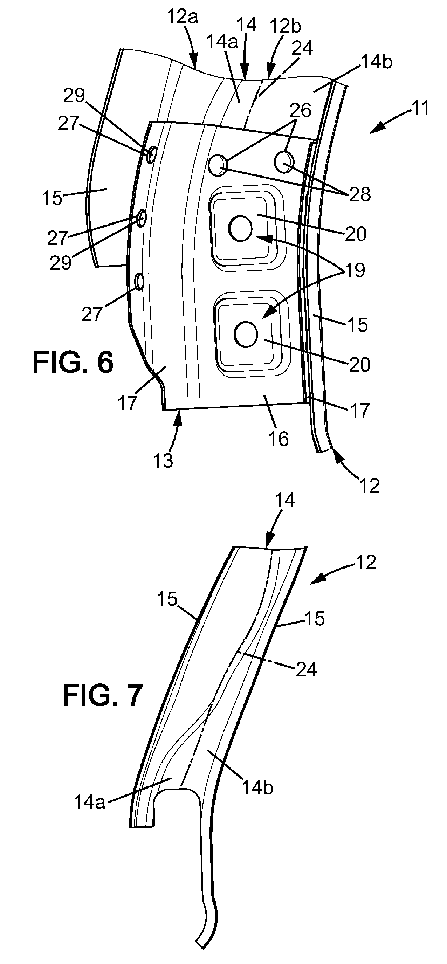

Comme on peut le voir sur les figures 4 à 7, chaque insert composite 12 est réalisé en deux pièces composites 12a, 12b présentant chacune une section sensiblement en L et formant chacune l'une des ailes latérales 15 de l'insert composite 12 et une partie, respectivement, 14a, 14b, de l'âme 14 de l'insert de l'insert composite. Les deux parties 14a, 14b de l'âme 14 sont assemblées l'une à l'autre le long d'une ligne de jonction 24 qui s'étend sur toute la hauteur de l'âme 14. De préférence, comme représenté sur la figure 5, les deux pièces composites 12a, 12b sont assemblées l'une à l'autre par fusion de la matière composite qui les compose, au niveau d'une zone de recouvrement 25.

Cette zone de recouvrement peut être formée par deux bandes de recouvrement 25a, 25b appartenant respectivement aux deux parties d'âme 14a, 14b et qui sont superposées l'une à l'autre et fusionnées par pressage à chaud, comme il sera expliqué ci-après. De plus, comme on peut le voir sur les figures 4, 5 et 6, le flasque métallique 13 peut présenter des évidements 26 au niveau de son âme 16 au niveau de ses deux ailes latérales 17. Ces évidements 26, 27 contribuent à solidariser les deux pièces composites 12a, 12b avec le flasque 13, par des rivetages 28, 29, formés par pénétration de la matière des pièces composites 12a, 12b dans lesdits évidements 26, 27. Ces rivetages sont obtenus par fluage de la matière des pièces composites 12a, 12b, par collage ou par pressage dans un moule chaud, comme il sera expliqué ci-après.

Au total, la solidarisation mutuelle des deux pièces composites 12a, 12b peut donc ici être obtenue par trois moyens complémentaires :
- le surmoulage des bords latéraux 10 de la coque en matière plastique,
- la fusion des deux pièces composites 12a, 12b au niveau des bandes de recouvrement 25a, 25b,
- et les rivetages 28, 29.

Le cas échéant, la solidarisation entre les deux pièces composites 12a, 12b, pourrait être obtenues par un seulement ou certains seulement de ces moyens, ou par tout autre moyen de fixation.

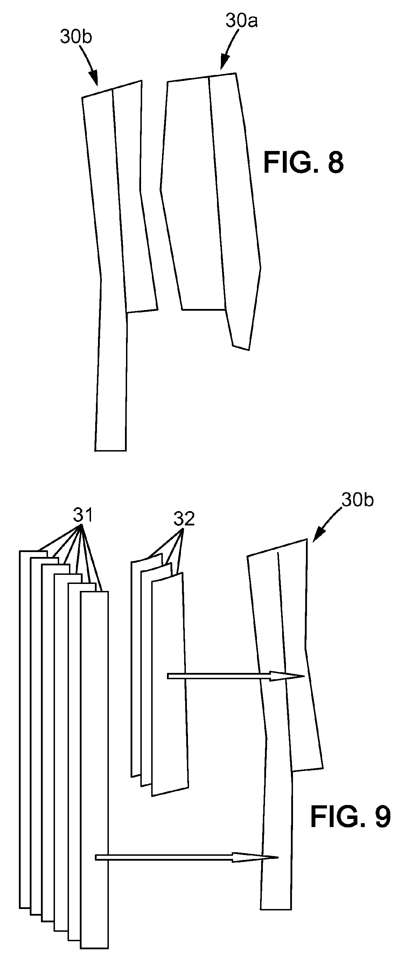

Comme représenté sur les figures 8 à 10, chacune des pièces composites 12a, 12b constituant chaque insert composite 12, est réalisée à partir d'un flanc, respectivement 30a, 30b constitué par un empilage de feuilles 31-34 de matériau composite. Chacune des feuilles 31-34 de matériau composite peut présenter des fibres de renfort orientées dans une direction prédéterminée, par exemple parallèlement à la direction longitudinale de la pièce composite ou transversalement. Les feuilles de matériau composite présentant des orientations de fibres différentes peuvent être superposées selon des séquences prédéterminées, de façon à maximiser la résistance mécanique des pièces composites 12a, 12b finalement obtenues, en fonction des efforts qu'elles sont destinées à subir.

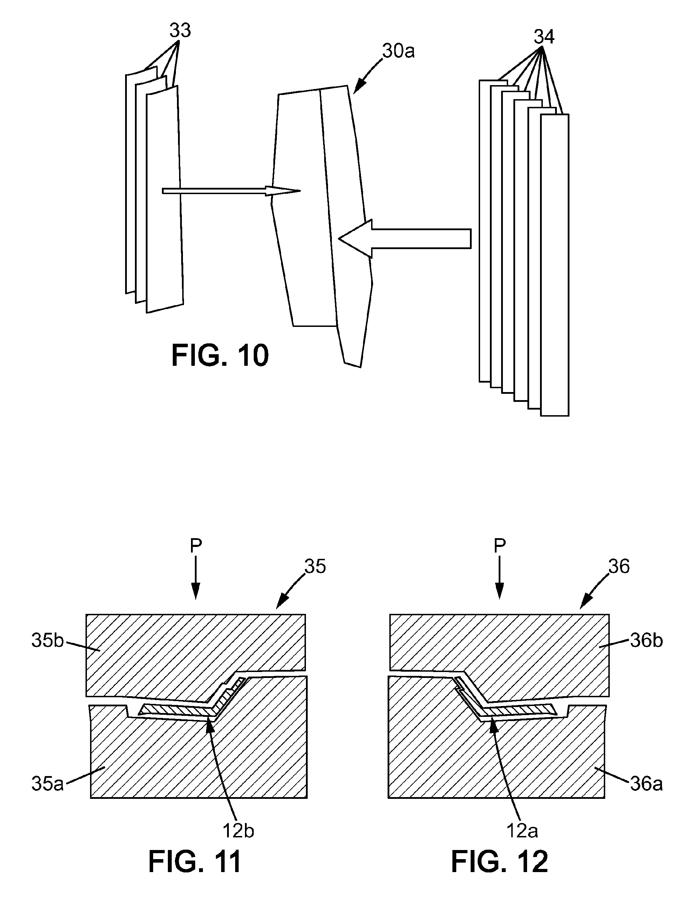

Comme représenté sur les figures 11 et 12, les flancs 30a, 30b peuvent être pressés dans des moules chauds 35, 36, de façon à assembler entre elles les feuilles de matériau composite 31, 32 pour former la pièce composite 12b et les feuilles 33, 34 pour former la pièce composite 12a. Les moules 35, 36 sont classiquement constitués en deux parties, respectivement 35a, 35b et 36a, 36b, l'une 35a, 36a étant fixe et l'autre 35b, 36b étant mobile selon une direction de pressage P. Avantageusement, les moules 35, 36 sont conformés de façon que les ailes latérales 15 des deux pièces composites 12a, 12b soient disposées sensiblement perpendiculairement à la direction de pressage P, tandis que les parties d'âme 14a, 14b sont disposées en faisant un angle relativement faible par rapport à la direction de pressage P. Les moules 35, 36 peuvent par exemple être initialement chauffés pour être à une température de 80 °C lorsque les flancs 30a, 30b y sont mis en place, après quoi les moules sont fermés et laissés à refroidir pendant le pressage.

Ainsi, lors du pressage, les fibres des ailes latérales 15, qui sont les parties les plus sollicitées des pièces composites 12a, 12b, ne subissent aucun désordre et conservent des propriétés mécaniques optimales. Les éventuelles désorganisations de fibres qui pourraient intervenir dans les parties d'âme 14a, 14b lors du pressage à chaud, sont moins gênantes puisque l'âme 14 de l'insert rigide 12 est la partie la moins sollicitée mécaniquement de cet insert rigide.

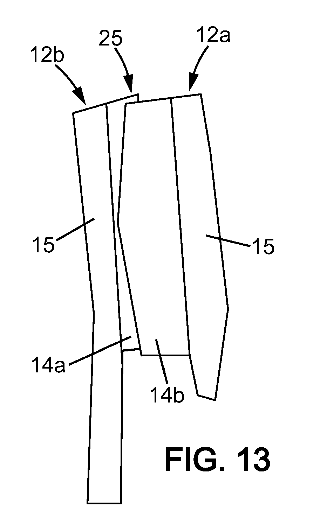

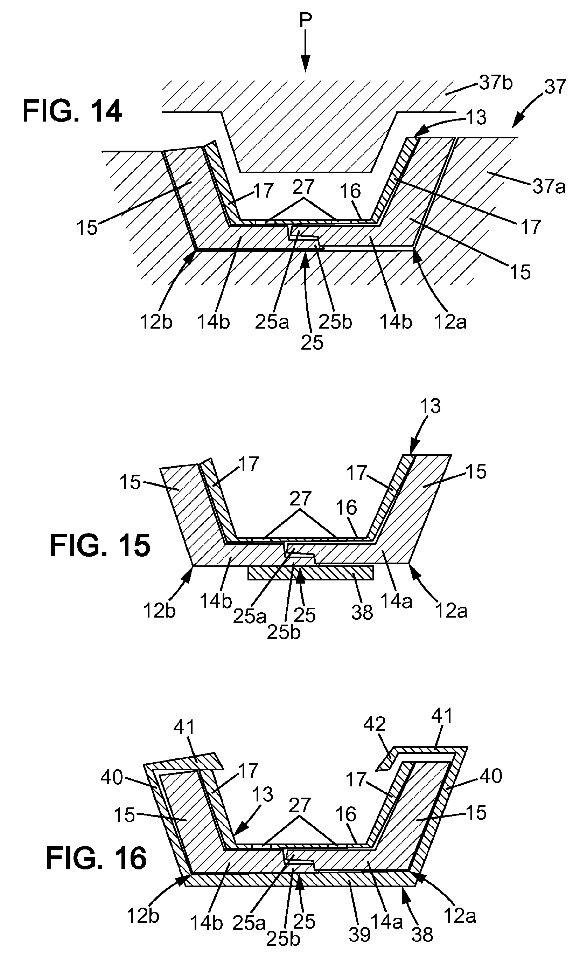

Après réalisation des pièces composites 12a, 12b par pressage dans des moules chauds, ces deux pièces sont disposées dans un moule chaud 37 (préalablement chauffé par exemple à 80°C) visible sur la figure 14, de façon que leur bandes de recouvrement 25a, 25b soient superposées l'une à l'autre, comme représenté sur les figures 13 et 14. De plus, le flasque 13 est également disposé dans le moule 37, puis les deux parties 37a, 37b du moule 37 sont serrées l'une contre l'autre dans la direction de pressage P qui est sensiblement perpendiculaire à l'âme 14 de l'insert. Le chauffage du moule est interrompu lors de sa fermeture, et le pressage est maintenu pendant le refroidissement du moule. Au cours de cette opération de pressage, sont formés les rivetages 28, 29 susmentionnés, par fluage de la matrice thermoplastique du composite dans les évidements 26, 27 du flasque 13.

Comme représenté sur la figure 15, en variante, l'assemblage entre les pièces composites 12a, 12b peut être renforcé en prévoyant au moins une feuille composite supplémentaire 38, qui recouvre au moins partiellement les parties d'âme 14a, 14b des deux pièces composites, par exemple sur la face opposée à celle fixée au flasque 13. Cette couche 38 est alors fusionnée au moins partiellement avec les deux parties d'âme 14a, 14b lors du pressage dans le moule chaud 37 susmentionné.

De plus, comme représenté sur la figure 16, ladite feuille composite 38 peut recouvrir également les ailes latérales de l'insert. Dans ce cas, la couche composite 38 peut comporter une âme 39 recouvrant l'âme 14 de l'insert 12 à l'opposé du flasque 13, deux ailes latérales 40 recouvrant la face extérieure des ailes latérales 15 et éventuellement deux rabats 41 repliés contre les bords libres des ailes latérales 15 et 17, à l'opposé de l'aile 14 de l'insert. Ces rabats 41, ou l'un d'eux, peuvent en outre être prolongés par un repli 42 de la feuille composite 38, qui recouvre partiellement la face intérieure de l'aile latérale 17 correspondante du flasque 1. L'ensemble représenté sur la figure 16 est ensuite pressé à chaud dans le moule 37 susmentionné.

On notera que l'invention, décrite ci-dessus dans son application au dossier du siège, est également applicable à l'assise. Dans ce cas, la coque 8 en matière plastique formerait l'ossature de l'assise et les bords latéraux de la coque 8 en matière plastique s'étendraient respectivement le long des côtés de l'assise entre une première extrémité (l'extrémité avant) proche du mécanisme d'articulation 6 et une deuxième extrémité éloignée dudit mécanisme d'articulation, et chaque insert rigide 12 en matériau composite serait surmoulé par un des deux bords latéraux 10 de la coque en matière plastique, chaque insert rigide 12 s'étendant sur une certaine longueur à partir de la première extrémité dudit bord latéral correspondant. Dans ce cas également, l'âme 14 de l'insert 12 serait sensiblement perpendiculaire au plan moyen de l'assise et les ailes latérales 15 sensiblement parallèles au plan moyen de l'assise, ladite âme 14 étant reliée au mécanisme d'articulation 6 au niveau de la première extrémité du bord latéral correspondant.

## Revendications

1. Siège de véhicule comportant une assise (2) et un dossier (5) relié à l'assise par au moins un mécanisme d'articulation (6) adapté permettre un réglage d'inclinaison du dossier et pour verrouiller le dossier dans l'inclinaison choisie, le siège comportant un élément de siège choisi parmi le dossier et l'assise, ledit élément de siège s'étendant selon un plan moyen et présentant deux côtés, et ledit élément de siège comportant :
- une coque (8) en matière plastique présentant deux bords latéraux (10) qui s'étendent respectivement le long des côtés de l'élément de siège entre une première extrémité proche du mécanisme d'articulation et une deuxième extrémité éloignée dudit mécanisme d'articulation,
- au moins un insert rigide (12) en matériau composite surmoulé par un des deux bords latéraux (10) de la coque en matière plastique, ledit insert rigide (12) s'étendant sur une certaine longueur à partir de la première extrémité dudit bord latéral correspondant, ledit insert (12) comprenant des fibres résistantes noyées dans une matrice synthétique, et ledit insert présentant une section en U ayant une âme (14) sensiblement perpendiculaire au plan moyen de l'élément de siège et deux ailes latérales (15) sensiblement parallèles au plan moyen de l'élément de siège, ladite âme (14) étant reliée audit mécanisme d'articulation (6) au niveau de la première extrémité du bord latéral correspondant,
**caractérisé en ce que** ledit insert (12) est formé en deux pièces composites (12a, 12b) solidarisées entre elles, chacune desdites deux pièces composites présentant une section en L et comprenant une partie d'âme (14a, 14b) appartenant à l'âme (14) de l'insert et l'une des ailes (15) de l'insert, chacune des deux parties d'âme s'étendant sur sensiblement toute la hauteur de l'âme (14) de l'insert.

2. Siège selon la revendication 1, dans lequel les deux pièces composites (12a, 12b) sont solidarisées entre elles par la coque (8) en matière plastique, qui est surmoulée sur lesdites deux pièces composites.

3. Siège selon la revendication 1 ou la revendication 2, dans lequel les deux pièces composites (12a, 12b) sont solidarisées entre elles par fusion le long d'une ligne de jonction (24) entre les parties d'âme (14a, 14b) des deux pièces composites.

4. Siège selon la revendication 3, dans lequel les deux pièces composites (12a, 12b) comportent respectivement deux bandes de recouvrement (25a, 25b) qui sont superposées l'une à l'autre et assemblées entre elles par fusion le long de ladite ligne de jonction (24).

5. Siège selon l'une quelconque des revendications précédentes, dans lequel les deux pièces composites (12a, 12b) sont solidarisées entre elles par au moins une feuille de composite (38) qui recouvre au moins partiellement les parties d'âme (4a, 14b) des deux pièces composites et les ailes latérales de l'insert.

6. Siège selon l'une quelconque des revendications précédentes, comportant en outre au moins un flasque métallique (13) qui recouvre au moins partiellement les parties d'âme (14a, 14b) des deux pièces composites et qui est solidarisé auxdites deux pièces composites, ledit flasque métallique étant surmoulé par le bord latéral correspondant de la coque en matière plastique et étant relié au mécanisme d'articulation (6) .

7. Siège selon la revendication 6, dans lequel le flasque métallique comporte des évidements (26) en regard des deux parties d'âme (14a, 14b) des deux pièces composites et est solidarisé avec chacune desdites parties d'âme par des rivetages (28) formés par pénétration de la matière de ces parties d'âme (14a, 14b) dans lesdits évidements (26).

8. Siège selon la revendication 6 ou la revendication 7, dans lequel le flasque métallique recouvre au moins partiellement l'âme (14) et les deux ailes latérales (15) de l'insert et est solidarisé également avec lesdites ailes latérales par des rivetages (29) formés par pénétration de la matière de ces ailes latérales (15) dans des évidements (27) présentés par le flasque métallique (13) en regard desdites ailes latérales.

9. Siège selon l'une quelconque des revendications 6 à 8, dans lequel le flasque métallique (13) est solidarisé par vissage avec une patte rigide (22) appartenant au mécanisme d'articulation (6), ledit flasque métallique (13) présentant au moins une surface d'appui (21) non enrobée par la coque (8) en matière plastique et la patte (22) du mécanisme d'articulation étant en appui sur ladite surface d'appui.

10. Procédé de fabrication d'un siège selon l'une quelconque des revendications précédentes, comprenant au moins les étapes suivantes :
(a) une étape de fabrication de pièces composites au cours de laquelle on forme les deux pièces composites (12a, 12b) par pressage à chaud,
(b) une étape d'assemblage au cours de laquelle on assemble les deux pièces composites par leurs parties d'âme (14a, 14b) respectives.

11. Procédé selon la revendication 10, dans lequel au cours de l'étape (a) de fabrication des pièces composites, on fabrique chaque pièce composite par mise en forme d'un flan (30a, 30b) comprenant une superposition de feuilles composites (31 - 34), par pressage du flan dans un moule chaud (35, 36) qui comprend deux parties de moule (35a, 35b ; 36a, 6b) déplaçables l'une vers l'autre selon une direction de pressage (P), l'aile latérale (15) de la pièce composite (12a, 12b) ainsi moulée étant sensiblement perpendiculaire à ladite direction de pressage (P).

12. Procédé selon la revendication 10 ou la revendication 11, dans lequel au cours de l'étape (b) d'assemblage, on dispose les deux pièces composites (12a, 12b) en superposant partiellement leurs parties d'âme (14a, 14b) sur une certaine zone de recouvrement (25) et on fusionne lesdites parties d'âme dans la zone de recouvrement par pressage dans un moule chaud.

13. Procédé selon l'une quelconque des revendications 10 à 12, dans lequel au cours de l'étape (b) d'assemblage, on superpose les deux pièces composites (12a, 12b) avec un flasque métallique (13) qui comporte des évidements (26, 27) et qui recouvre au moins partiellement lesdites deux pièces composites (12a, 12b), et on assemble les deux pièces composites en faisant fluer la matière des pièces composites au travers des évidements (26, 27) du flasque métallique, par pressage dans un moule chaud.

## Patentansprüche

1. Sitz für ein Fahrzeug, umfassend ein Sitzbauteil (2) und eine Rückenlehne (5), die vermittels wenigstens einem Gelenkmechanismus (6), welcher dazu ausgebildet ist, eine Regulierung der Neigung der Rückenlehne zu gestatten und die Rückenlehne in der ausgewählten Neigung zu verriegeln, mit dem Sitzbauteil verbunden ist, wobei der Sitz ein Sitz-Element umfasst, das aus der Rückenlehne und dem Sitzbauteil ausgewählt ist, wobei das Sitz-Element sich längs einer mittleren Ebene erstreckt und zwei Seiten aufweist, und wobei das Sitz-Element umfasst:
- eine Schale (8) aus einem Kunststoff-Material, die zwei seitliche Ränder (10) aufweist, die sich jeweils entlang den Seiten des Sitz-Elements zwischen einem ersten, dem Gelenkmechanismus nahen Ende und einem zweiten, dem Gelenkmechanismus fernen Ende erstrecken,
- wenigstens einen starren Einsatz (12) aus einem Verbundwerkstoff, auf den einer der zwei seitlichen Ränder (10) der Schale aus Kunststoff-Material aufgeformt ist, wobei der starre Einsatz (12) sich, ausgehend von dem ersten Ende des entsprechenden seitlichen Rands, über eine gewisse Länge erstreckt, wobei der Einsatz (12) Verstärkungsfasern umfasst, die in einer Kunststoff-Matrix getränkt sind, und wobei der Einsatz einen U-förmigen Querschnitt aufweist, mit einem Mittelteil (14), der im Wesentlichen senkrecht zu der mittleren Ebene des Sitz-Elements verläuft, und mit zwei seitlichen Flügeln (15), die im Wesentlichen parallel zu der mittleren Ebene des Sitz-Elements verlaufen, wobei der Mittelteil (14) mit dem Gelenkmechanismus (6) auf der Höhe von dem ersten Ende des entsprechenden seitlichen Rands verbunden ist,
**dadurch gekennzeichnet, dass** der Einsatz (12) aus zwei miteinander verbundenen Verbund-Stücken (12a, 12b) gebildet ist, wobei jedes der zwei Verbund-Stücke einen L-förmigen Querschnitt aufweist und einen Mittelteil-Abschnitt (14a, 14b), der zu dem Mittelteil (14) von dem Einsatz gehört, sowie einen der Flügel (15) von dem Einsatz umfasst, wobei jeder der zwei Mittelteil-Abschnitte sich im Wesentlichen über die gesamte Höhe des Mittelteils (14) von dem Einsatz erstreckt.

2. Sitz nach Anspruch 1, wobei die zwei Verbund-Stücke (12a, 12b) miteinander durch die Schale (8) aus Kunststoff-Material verbunden sind, welche auf die zwei Verbund-Stücke aufgeformt ist.

3. Sitz nach Anspruch 1 oder Anspruch 2, wobei die zwei Verbund-Stücke (12a, 12b) miteinander durch Verschmelzung entlang einer Verbindungslinie (24) zwischen den Mittelteil-Abschnitten (14a, 14b) der zwei Verbund-Stücke verbunden sind.

4. Sitz nach Anspruch 3, wobei die zwei Verbund-Stücke (12a, 12b) jeweils zwei Abdeckstreifen (25a, 25b) umfassen, die übereinander gelegt und miteinander durch Verschmelzung entlang der Verbindungslinie (24) verbunden sind.

5. Sitz nach einem der vorhergehenden Ansprüche, wobei die zwei Verbund-Stücke (12a, 12b) miteinander durch wenigstens ein Verbund-Blatt (38) verbunden sind, das wenigstens teilweise die Mittelteil-Abschnitte (14a, 14b) der zwei Verbund-Stücke und die seitlichen Flügel von dem Einsatz abdeckt.

6. Sitz nach einem der vorhergehenden Ansprüche, weiterhin umfassend wenigstens einen metallischen Flansch (13), der wenigstens teilweise die Mittelteil-Abschnitte (14a, 14b) der zwei Verbund-Stücke abdeckt und der mit den zwei Verbund-Stücken verbunden ist, wobei auf den metallischen Flansch der entsprechende seitliche Rand der Schale aus Kunststoff-Material aufgeformt ist, und der Flansch mit dem Gelenkmechanismus (6) verbunden ist.

7. Sitz nach Anspruch 6, wobei der metallische Flansch Ausnehmungen (26) gegenüber den zwei Mittelteil-Abschnitten (14a, 14b) der zwei Verbund-Stücke umfasst und mit jedem dieser Mittelteil-Abschnitte durch Nietverbindungen (28) verbunden ist, die durch Eindringen von dem Material der Mittelteil-Abschnitte (14a, 14b) in die Ausnehmungen (26) gebildet sind.

8. Sitz nach Anspruch 6 oder Anspruch 7, wobei der metallische Flansch wenigstens teilweise den Mittelteil (14) und die zwei seitlichen Flügel (15) von dem Einsatz abdeckt und außerdem mit den seitlichen Flügeln durch Nietverbindungen (29) verbunden ist, die dadurch gebildet werden, dass das Material dieser seitlichen Flügel (15) in die Ausnehmungen (17) eindringt, die gegenüber von den seitlichen Flügeln in dem metallischen Flansch (13) vorgesehen sind.

9. Sitz nach einem der Ansprüche 6 bis 8, wobei der metallische Flansch (13) durch Verschraubung mit einer starren Lasche (22) verbunden ist, die zu dem Gelenkmechanismus (6) gehört, wobei der metallische Flansch (13) wenigstens eine Anlagefläche (21) aufweist, die nicht von der Schale (8) aus Kunststoff-Material eingehüllt ist, und die Lasche (22) von dem Gelenkmechanismus an der Anlagefläche anliegt.

10. Verfahren zur Herstellung von einem Sitz nach einem der vorhergehenden Ansprüche, umfassend wenigstens die folgenden Schritte:
(a) einen Schritt der Herstellung von Verbund-Stücken, bei dem die zwei Verbund-Stücke (12a, 12b) durch Warmpressen geformt werden,
(b) einen Montage-Schritt, bei dem die zwei Verbund-Stücke an ihren jeweiligen Mittelteil-Abschnitten (14a, 14b) zusammengesetzt werden.

11. Verfahren nach Anspruch 10, wobei beim Schritt (a) der Herstellung der Verbund-Stücke jedes Verbund-Stück hergestellt wird, indem ein Zuschnitt (30a, 30b) in Form gebracht wird, der eine Übereinanderschichtung von Verbund-Blättern (31-34) umfasst, indem der Zuschnitt in einer warmen Form (35, 36) gepresst wird, die zwei in einer Press-Richtung (P) aufeinander zu bewegbare Formteile (35a, 35b; 36a, 36b) umfasst, wobei der seitliche Flügel (15) von dem so geformten Verbund-Stück (12a, 12b) im Wesentlichen senkrecht zu der Press-Richtung (P) verläuft.

12. Verfahren nach Anspruch 10 oder Anspruch 11, wobei beim Montage-Schritt (b) die zwei Verbund-Stücke (12a, 12b) angeordnet werden, indem ihre Mittelteil-Abschnitte (14a, 14b) teilweise in einem bestimmten Abdeckungsbereich (25) übereinander gelegt werden, und die Mittelteil-Abschnitte in dem Abdeckungsbereich durch Pressen in einer warmen Form verschmolzen werden.

13. Verfahren nach einem der Ansprüche 10 bis 12, wobei beim Montage-Schritt (b) auf die zwei Verbund-Stücke (12a, 12b) ein metallischer Flansch (13) gelegt wird, der Ausnehmungen (26, 27) umfasst, und der die zwei Verbund-Stücke (12a, 12b) wenigstens teilweise abdeckt, und wobei die zwei Verbund-Stücke zusammengesetzt werden, indem durch Pressen in einer warmen Form bewirkt wird, dass das Material der Verbund-Stücke durch die Ausnehmungen (26, 27) von dem metallischen Flansch fließt.

## Claims

1. Vehicle seat comprising a seat portion (2) and a backrest (5) connected to the seat portion by at least one hinge mechanism (6) to allow adjusting the tilt of the backrest and to lock the backrest into the selected tilt angle, the seat comprising a seat element chosen from among the backrest and the seat portion, said seat element extending along a mean plane and having two sides, and said seat element comprising:
- a shell (8) of plastic material, having two lateral edges (10) which respectively extend along the sides of the seat element between a first end near the hinge mechanism and a second end further from said hinge mechanism,
- at least one rigid insert (12) of composite material overmolded by one of the two lateral edges (10) of the shell of plastic material, said rigid insert (12) extending for a certain length from the first end of said corresponding lateral edge, said insert (12) comprising resistant fibers embedded in a synthetic matrix, and said insert presenting a U-shaped cross-section having a core (14) substantially perpendicular to the mean plane of the seat element and two side flanges (15) substantially parallel to the mean plane of the seat element, said core (14) being connected to said hinge mechanism (6) at the first end of the corresponding lateral edge,
wherein said insert (12) is formed of two composite parts (12a, 12b) integrally attached to each other, each of said two composite parts having an L-shaped cross-section and comprising a core portion (14a, 14b) that is part of the core (14) of the insert and one of the flanges (15) of the insert, each of the two core portions extending for substantially the entire height of the core (14) of the insert.

2. Seat according to claim 1, wherein the two composite parts (12a, 12b) are integrally attached to each other by the shell (8) of plastic material, which is overmolded onto said two composite parts.

3. Seat according to claim 1 or claim 2, wherein the two composite parts (12a, 12b) are integrally attached to each other by fusion along a joining line (24) between the core portions (14a, 14b) of the two composite parts.

4. Seat according to claim 3, wherein the two composite parts (12a, 12b) each has an overlapping strip (25a, 25b), the two strips being superimposed atop one another and assembled together by fusion along said joining line (24).

5. Seat according to any one of the above claims, wherein the two composite parts (12a, 12b) are integrally attached to each other by at least one composite sheet (38) which at least partially covers the core portions (14a, 14b) of the two composite parts and the side flanges of the insert.

6. Seat according to any one of the above claims, additionally comprising at least one metal plate (13) which at least partially covers the core portions (14a, 14b) of the two composite parts and which is integrally attached to said two composite parts, said metal plate being overmolded by the corresponding lateral edge of the shell of plastic material and being connected to the hinge mechanism (6).

7. Seat according to claim 6, wherein the metal plate comprises recesses (26) facing the two core portions (14a, 14b) of the two composite parts and is integrally attached to each of said core portions by the riveting (28) formed by the penetration of the material of these core portions (14a, 14b) into said recesses (26).

8. Seat according to claim 6 or claim 7, wherein the metal plate at least partially covers the core (14) and the two side flanges (15) of the insert and is also integrally attached to said side flanges by riveting (29) formed by the penetration of the material of these side flanges (15) into recesses (27) presented by the metal plate (13) facing said side flanges.

9. Seat according to any one of claims 6 to 8, wherein the metal plate (13) is integrally attached, by a screwing attachment, to a rigid tab (22) that is part of the hinge mechanism (6), said metal plate (13) having at least one support surface (21) not encased by the shell (8) of plastic material and the tab (22) of the hinge mechanism being supported on said support surface.

10. Method for manufacturing a seat according to any one of the above claims, comprising at least the following steps:
(a) a composite part manufacturing step, during which the two composite parts (12a, 12b) are formed by hot pressing,
(b) an assembly step, during which the two composite parts are assembled together by their respective core portions (14a, 14b).

11. Method according to claim 10, wherein during the composite part manufacturing step (a), each composite part is manufactured by shaping a blank (30a, 30b) comprising superimposed composite sheets (31-34), by pressing the blank into a hot mold (35, 36) which comprises two mold parts (35a, 35b; 36a, 36b) which can be moved towards each other in a pressing direction (P), the side flange (15) of the composite part (12a, 12b) molded in this manner being substantially perpendicular to said pressing direction (P).

12. Method according to claim 10 or claim 11, wherein, during the assembly step (b), the two composite parts (12a, 12b) are arranged so that their core portions (14a, 14b) are partially superimposed in a certain overlapping area (25) and said core portions are fused together in said overlapping area by pressing in a hot mold.

13. Method according to any one of the claims 10 to 12, wherein, during the assembly step (b), the two composite parts (12a, 12b) are superimposed with a metal plate (13) which comprises recesses (26, 27) and which at least partially covers said two composite parts (12a, 12b), and the two composite parts are assembled together while the material of the composite parts flows into recesses (26, 27) in the metal plate, by pressing in a hot mold.
